# EUROPEAN PATENT APPLICATION

(11) **EP 2 056 186 A1**
(43) Date of publication of application: **06.05.2009**
(21) Application number: 07119406.2
(22) Date of filing: 26.10.2007
(51) Int. Cl.: G06F 3/044

(54) **Touch screen and electronic device**

(71) Applicant: Research In Motion Limited, Waterloo, Ontario N2L 3W8 (CA)
(72) Inventor: Hui, Edward, Waterloo Ontario N2T 2J3 (CA); Purdy, Michael, Kitchener Ontario N2E 4A4 (CA)
(74) Representative: Rickard, David John

(57) **Abstract**

A touch screen display includes a display device and a touch-sensitive overlay disposed on the display device. The touch sensitive overlay includes a substrate, first and second capacitive touch sensor circuit layers disposed on the substrate for determining a location of a touch to the touch screen display, and a thin-film deposited barrier layer for electrically isolating the first capacitive touch sensor circuit layer from the second capacitive touch sensor circuit layer.

## Description

The present application relates generally to input and output devices for portable electronic devices.
Portable electronic devices have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and easy portability. Smaller devices are generally desirable for portability. A touch screen input/output device is particularly useful as such handheld devices are small and are therefore limited in space available for user input and output devices. Further, the screen content on the touch screen input/output devices can be modified depending on the functions and operations being performed.

Touch screen input/output devices are constructed of a display, such as a liquid crystal display, with a touch-sensitive overlay. These input/output devices suffer from poor visibility as a result of poor light transmission from the liquid crystal display, through the layers that make up the touch-sensitive overlay.

Improvements in input/output devices are therefore desirable.

### GENERAL

According to one aspect, a touch screen display may comprise a display device and a touch-sensitive overlay disposed on the display device. The touch sensitive overlay may comprise a substrate, first and second capacitive touch sensor circuit layers disposed on the substrate for determining a location of a touch to the touch screen display, and a thin-film deposited barrier layer for electrically isolating the first capacitive touch sensor circuit layer from the second capacitive touch sensor circuit layer.

According to another aspect, a portable electronic device may comprise a base and a touch screen display coupled to the base. The touch screen display may comprise a display device and a touch-sensitive overlay disposed on the display device. The touch-sensitive overlay may comprise a substrate, first and second capacitive touch sensor circuit layers disposed on the substrate, for determining a location of a touch to the touch screen display, and a thin-film deposited barrier layer for electrically isolating the first capacitive touch sensor circuit layer from the second capacitive touch sensor circuit layer. The portable electronic device also may comprise operational components disposed between the base and the touch screen display, including a memory and a processor connected to the touch screen display and to the memory.

According to still another aspect, there may be provided a process for fabricating a touch screen display. The process may comprise forming a first capacitive touch sensor circuit layer in a touch-sensitive overlay stack comprising a substrate, depositing a thin-film barrier layer on the first capacitive touch sensor circuit layer and forming a second capacitive touch sensor circuit layer on the thin-film barrier layer.

### BRIEF DESCRIPTION OF THE DRAWINGS

Embodiments of the present application will now be described, by way of example only, with reference to the attached Figures, wherein:

Figure 1 is a block diagram of components, including certain internal components, of a portable electronic device according to one embodiment;

Figure 2A is a simplified top view of the portable electronic device;

Figure 2B is a simplified sectional side view of the portable electronic device of Figure 2A;

Figure 3 is a sectional side view of a touch screen display according to an embodiment;

Figure 4 is a flow chart showing steps in a process for fabricating the touch screen display of Figure 3; and

Figure 5 is a sectional side view of a touch screen display according to another embodiment.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a touch screen display and to a portable electronic device including a touch screen display. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

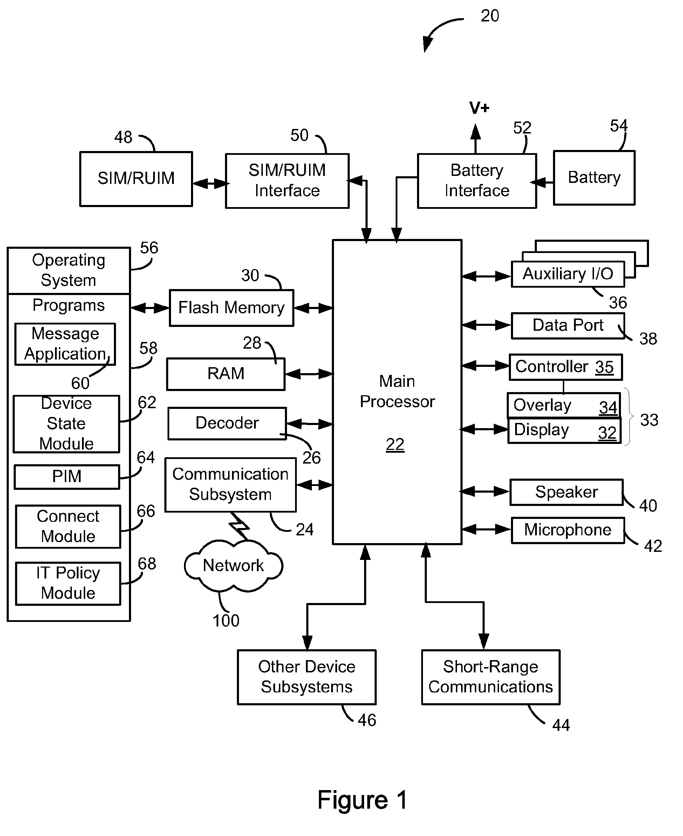

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption techniques such as Data Encryption Standard (DES), Triple DES, or Advanced Encryption Standard (AES)). The communication subsystem 24 receives messages from and sends messages to a wireless network 100. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 100 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 100 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 that make up a touch screen display 33, an auxiliary input/output (I/O) subsystem 36, a data port 38, a speaker 40, a microphone 42, short-range communications 44 and other device subsystems 46. The processor 22 interacts with the touch-sensitive overlay 34 via an electronic controller 35.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 100, and device-resident functions such as a calculator or task list.

The portable electronic device 20 can send and receive communication signals over the wireless network 100 after network registration or activation procedures have been completed. Network access is associated with a subscriber or user of the portable electronic device 20. To identify a subscriber according to the present embodiment, the portable electronic device 20 uses a SIM/RUIM card 48 (i.e. Subscriber Identity Module or a Removable User Identity Module) inserted into a SIM/RUIM interface 50 for communication with a network. The SIM card or RUIM 48 is one type of a conventional "smart card" that can be used to identify a subscriber of the portable electronic device 20 and to personalize the portable electronic device 20, among other things. In the present embodiment the portable electronic device 20 is not fully operational for communication with the wireless network 100 without the SIM card/RUIM 48. By inserting the SIM card/RUIM 48 into the SIM/RUIM interface 50, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 48 includes a processor and memory for storing information. Once the SIM card/RUIM 48 is inserted into the SIM/RUIM interface 50, it is coupled to the processor 22. In order to identify the subscriber, the SIM card/RUIM 48 can include some user parameters such as an International Mobile Subscriber Identity (IMSI). An advantage of using the SIM card/RUIM 48 is that a subscriber is not necessarily bound by any single physical portable electronic device. The SIM card/RUIM 48 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 52 for receiving one or more rechargeable batteries 54. In at least some embodiments, the battery 54 can be a smart battery with an embedded microprocessor. The battery interface 52 is coupled to a regulator (not shown), which assists the battery 54 in providing power V+ to the portable electronic device 20. Although current technology makes use of a battery, future technologies such as micro fuel cells may provide the power to the portable electronic device 20.

The portable electronic device 20 also includes an operating system 56 and software components 58 to 68 which are described in more detail below. The operating system 56 and the software components 58 to 68 that are executed by the processor 22 are typically stored in a persistent store such as the flash memory 30, which may alternatively be a read-only memory (ROM) or similar storage element (not shown). Those skilled in the art will appreciate that portions of the operating system 56 and the software components 58 to 68, such as specific device applications, or parts thereof, may be temporarily loaded into a volatile store such as the RAM 28. Other software components can also be included, as is well known to those skilled in the art.

The subset of software applications 58 that control basic device operations, including data and voice communication applications, will normally be installed on the portable electronic device 20 during its manufacture. Other software applications include a message application 60 that can be any suitable software program that allows a user of the portable electronic device 20 to send and receive electronic messages. Various alternatives exist for the message application 60 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 62, a Personal Information Manager (PIM) 64, and other suitable modules (not shown). The device state module 62 provides persistence, i.e. the device state module 62 ensures that important device data is stored in persistent memory, such as the flash memory 30, so that the data is not lost when the portable electronic device 20 is turned off or loses power.

The PIM 64 includes functionality for organizing and managing data items of interest to the user, such as, but not limited to, e-mail, contacts, calendar events, voice mails, appointments, and task items. A PIM application has the ability to send and receive data items via the wireless network 100. PIM data items may be seamlessly integrated, synchronized, and updated via the wireless network 100 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 66, and an information technology (IT) policy module 68. The connect module 66 implements the communication protocols that are required for the portable electronic device 20 to communicate with the wireless infrastructure and any host system, such as an enterprise system, that the portable electronic device 20 is authorized to interface with.

The connect module 68 includes a set of APIs that can be integrated with the portable electronic device 20 to allow the portable electronic device 20 to use any number of services associated with the enterprise system. The connect module 66 allows the portable electronic device 20 to establish an end-to-end secure, authenticated communication pipe with the host system. A subset of applications for which access is provided by the connect module 66 can be used to pass IT policy commands from the host system to the portable electronic device 20. This can be done in a wireless or wired manner. These instructions can then be passed to the IT policy module 68 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 100, the auxiliary I/O subsystem 36, the data port 38, the short-range communications subsystem 44, or any other suitable device subsystem 46. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 38 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 38 can be any suitable port that enables data communication between the portable electronic device 20 and another computing device. The data port 38 can be a serial or a parallel port. In some instances, the data port 38 can be a USB port that includes data lines for data transfer and a supply line that can provide a charging current to charge the battery 54 of the portable electronic device 20.

The short-range communications subsystem 44 provides for communication between the portable electronic device 20 and different systems or devices, without the use of the wireless network 100. For example, the short-range communications subsystem 44 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 36. A subscriber may also compose data items, such as e-mail messages, for example, using the touch-sensitive overlay 34 on the display 32 that form the touch screen display 33, and possibly the auxiliary I/O subsystem 36. The auxiliary subsystem 36 may include devices such as: a mouse, track ball, infrared fingerprint detector, or a roller wheel with dynamic button pressing capability. A keyboard can also be provided, such as an alphanumeric keyboard and/or telephone-type keypad. A composed item may be transmitted over the wireless network 100 through the communication subsystem 24.

For voice communications, the overall operation of the portable electronic device 20 is substantially similar, except that the received signals are output to the speaker 40, and signals for transmission are generated by the microphone 42. Alternative voice or audio I/O subsystems, such as a voice message recording subsystem, can also be implemented on the portable electronic device 20. Although voice or audio signal output is accomplished primarily through the speaker 40, the display 32 can also be used to provide additional information such as the identity of a calling party, duration of a voice call, or other voice call related information.

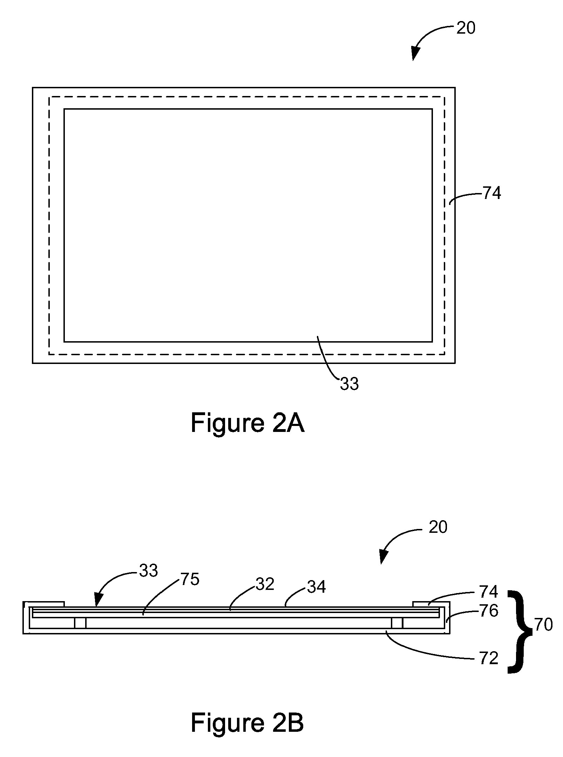

Reference is now made to Figures 2A and 2B which show views of a portable electronic device 20 including a touch screen display according to an exemplary embodiment. The portable electronic device 20 includes a housing 70 that includes a base 72 and a frame 74 spaced from the base 72 by sidewalls 76. The frame 74 frames the touch screen display 33. The base 72 includes a plate (not shown) that is releasably attached for insertion and removal of, for example, the battery 54 and the SIM card 48 described above. It will be appreciated that the base 72, the sidewalls 76 and the frame 74 can be injection molded, for example. The frame 74 is sized and shaped to frame a window in which the touch screen display 33 is exposed for input by user contact with the touch-sensitive overlay 34 of the touch screen display 33 and for displaying output on the display device 32. A touch screen display support 75 is provided under the display device 32. The components including the electronic controller 35, the processor 22 and other operational components including those described above with reference to Figure 1 are housed within the housing 70 to provide the functionality of the portable electronic device 20.

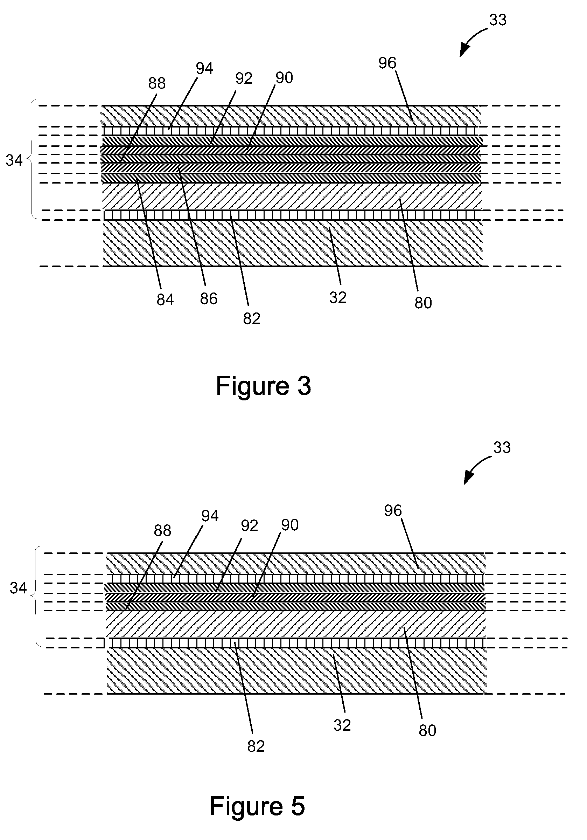

Referring now to Figure 3, there is shown a representative sectional side view of the touch screen display 33 according to one embodiment (not to scale). The touch screen display 33 is a capacitive touch-screen display 33 including the display device 32, which in the present embodiment is an LCD display 32, and the touch-sensitive overlay 34. The touch-sensitive overlay 34 includes a number of layers in a stack. In the present embodiment, the layers include a substrate 80 fixed to the LCD display 32 by a suitable adhesive 82, a ground shield layer 84 deposited on the substrate 80, a first thin-film deposited barrier layer 86, a first capacitive touch sensor circuit layer 88, a second thin-film deposited barrier layer 90, a second capacitive touch sensor circuit layer 92 and a cover lens 96 fixed to the second capacitive touch sensor circuit layer 92 by a suitable adhesive 94.

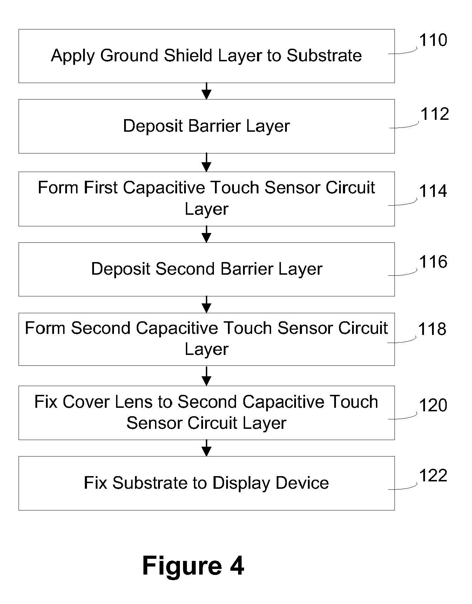

Continued reference is made to Figure 3 and now to Figure 4. In the present embodiment, the substrate 80 is a transparent polyethylene terephthalate (polyester) plate. It will be appreciated that other suitable substrate materials such as a glass or other suitable dielectric sheet can be used.

The ground shield layer 84 according to the present embodiment is a layer of indium tin oxide (ITO) applied to the substrate 80 by, for example, sputter coating on the substrate 80, and connected to a ground for shielding the first and second capacitive touch sensor circuit layers 88, 92 from the LCD display 32 (step 110). It will be appreciated that the ground shield layer 84 can be any suitable transparent material for providing a ground shield connected to a ground or a voltage supply for shielding, such as antimony tin oxide (ATO) and aluminum doped zinc oxide (ZAO).

The first thin film deposited barrier layer 86 is a barrier layer of a suitable non-conductive material such as silicon dioxide or silicon nitride or other suitable material for electrically isolating the ground shield layer 84 from the first capacitive touch sensor circuit layer 88. The first thin film deposited barrier layer 86 is a transparent coating of suitable thickness deposited on the ground shield layer 84 by, for example, physical vapour deposition, to provide a thin electrical barrier layer of, for example, between 100nm and 300nm (step 112).

Next, the first capacitive touch sensor circuit layer 88 is formed on the first thin film deposited barrier layer 86 (step 114). The first capacitive touch sensor circuit layer 88 according to the present embodiment is a layer of indium tin oxide (ITO) applied to the first thin film deposited barrier layer 86 and patterned by masking followed by etching away the unmasked areas. The ITO layer is thereby patterned into a suitable pattern, for example, into repeating diamond shapes, triangles, bars or other suitable pattern that extends across the touch screen display 33. The bars of the first capacitive touch sensor circuit layer 88 are connected to the electronic controller 35 shown in Figure 1 via conductive lead lines formed of any suitable conductive material such as copper or gold. It will be appreciated that the first capacitive touch sensor circuit layer 88 is not limited to ITO as other suitable materials can be used such as antimony tin oxide (ATO) and aluminum doped zinc oxide (ZAO).

The second thin film deposited barrier layer 90 is of a suitable non-conductive material, such as silicon dioxide or silicon nitride or other suitable material, for electrically isolating the first capacitive touch sensor circuit layer 88 from the second capacitive touch sensor circuit layer 92. The second thin film deposited barrier layer 90 is a transparent coating deposited on the first capacitive touch sensor circuit layer 88 by, for example, physical vapour deposition, to provide a thin electrical barrier layer (step 116).

The second capacitive touch sensor circuit layer 92 is then formed on the second thin film deposited barrier layer 90 (step 118). The second capacitive touch sensor circuit layer according to the present embodiment is a layer of indium tin oxide (ITO) applied to the second thin film deposited barrier layer 90 and patterned by masking followed by etching away the unmasked areas to form a suitable pattern that extends across the touch screen display 33. Again, the pattern of the second capacitive touch sensor circuit layer 92 extends generally perpendicularly to the pattern of the first capacitive touch sensor circuit layer 88, and is connected to the electronic controller 35 (shown in Figure 1) via conductive lead lines formed of suitable conductive material. Again, it will be appreciated that the first capacitive touch sensor circuit layer 88 is not limited to ITO as other suitable materials can be used such as antimony tin oxide (ATO) and aluminum doped zinc oxide (ZAO).

The location of a touch on the touch screen 33 is determined using the two capacitive touch sensor circuit layers 88, 92. The x and y location of a touch on the touch screen 33 are determined, with the x location determined by one of the capacitive touch sensor circuit layers 88, 92 and the y location determined by the other of the capacitive touch sensor circuit layers 88, 92. Each of the capacitive touch sensor circuit layers 88, 92 provides a signal to the controller 35 in response to a touch from a user resulting in a change in the electric field of each of the capacitive touch sensor circuit layers 88, 92. The signal represents the respective one of the x and y touch location.

Finally, a transparent cover layer 96 for providing a protective covering over the second capacitive touch sensor circuit layer 92. The protective covering according to the present embodiment is a transparent polymer lens that is fixed to the surface of the second touch sensor circuit layer 92 using a suitable optical adhesive 94 (step 120). The transparent cover layer 96 can alternatively, be coated on the second capacitive touch sensor circuit layer 92 by, for example, spray coating, rather than adhering a pre-formed lens to the stack.

In the embodiment shown in Figure 3, the substrate 80 is fixed to the LCD display 32 via a suitable optically clear adhesive 82 such as an Optically Clear Laminating Adhesive available from 3M™ (step 122).

In use, a screen is displayed on the LCD display 32, including options or commands for selection by a user of the portable electronic device 20. Each capacitive touch sensor circuit layer 88, 92 is driven with a current to provide an electric field that changes upon user-touching of the touch screen 33 as a result of capacitive coupling. The change in the electric field signals the controller 3 that a touch has occurred and the x and y coordinates of the touch are determined at the controller. The coordinates of the touch are used by the processor 22 to determine the associated option or command selected by the user from the screen displayed on the LCD display 32. Thus, the processor 22 performs actions based on the data resulting from the user touch.

The touch screen display 33 is not limited to the determination of a single location of a static touch event. Instead, motions such as the sliding of a finger along the touch screen display 33 can be determined. Further, touches at more than one location on the touch screen display 33 can be determined and motions such as increasing or decreasing the distance between finger touch locations can be determined. Each type of touch event and the location (coordinates) of the touch or touches can result in the initiation of different commands at the processor 22. Thus, the touch screen display 33 provides a graphical user interface for user interaction.

Reference is now made to Figure 5, which shows a representative sectional side view of the touch screen display 33 according to another embodiment (not to scale). Again, the touch screen display 33 is a capacitive touch-screen display 33 including the display device 32, which in the present embodiment is an LCD display 32, and the touch-sensitive overlay 34. The touch-sensitive overlay 34 includes a number of layers in a stack. The layers include a substrate 80 fixed to the LCD display 32 by a suitable adhesive 82, a first capacitive touch sensor circuit layer 88, a thin-film deposited barrier layer 90, a second capacitive touch sensor circuit layer 92 and a cover lens 96 fixed to the second capacitive touch sensor circuit layer 92 by a suitable adhesive 94. The present embodiment is similar to that shown in Figure 3 with the exception of the absence of a ground shield layer and a thin-film deposited barrier layer on the ground shield layer in the exemplary embodiment shown in Figure 5. Instead, the first capacitive touch sensor circuit layer 88 is formed on the substrate 80.

In the embodiment shown in Figure 5, the ground shield layer is not required as the controller 35 synchronizes the reading of the capacitive touch sensor circuit layers 88, 92 with LCD scanning such that the reading of the capacitive touch sensitive circuit layers is carried out during a period of time between refreshing of the LCD display. It will be appreciated that typical LCD displays have a refresh rate of from 40 Hz to 100 Hz. After drawing all of the lines displayed on the LCD display, a reading of the capacitive touch sensor circuit layers 88, 92 can be taken during the short period of time during which lines of the LCD display 32 are not being drawn. Thus, the reading of the touch sensor circuit layers 88, 92 is carried out after the drawing of the lines during which noise is created that can interfere with the reading. The reading can be carried out at any time during which lines are not drawn.

The thin-film deposited layer between the first and second capacitive touch sensor circuit layers provides a barrier layer between the two capacitive touch sensor circuit layers that is very thin by comparison to a second substrate. Thus, the overall thickness of the touch-sensitive overlay is decreased resulting in improved optical qualities as a higher percentage of light is transmitted through the touch-sensitive overlay, from the LCD display device. Thus, for a backlit display, for example, power requirements are reduced as less light is required for transmission.

While the embodiments described herein are directed to particular implementations of the touch screen display and the portable electronic device, it will be understood that modifications and variations to these embodiments are within the scope and sphere of the present application. For example, the size and shape of many of the features, including the touch sensor circuit layer patters can differ while still providing the same function. Many other modifications and variations may occur to those skilled in the art. All such modifications and variations are believed to be within the sphere and scope of the present application.

## Claims

1. A touch screen display comprising:
a display device; and
a touch-sensitive overlay disposed on the display device, the touch sensitive overlay comprising a substrate, first and second capacitive touch sensor circuit layers disposed on the substrate, for determining a location of a touch to the touch screen display, and a thin-film deposited barrier layer for electrically isolating the first capacitive touch sensor circuit layer from the second capacitive touch sensor circuit layer.

2. The touch screen display according to claim 1, wherein the touch-sensitive overlay comprises a shield disposed between the substrate and the first capacitive touch sensor circuit layer.

3. The touch screen display according to claim 1 or claim 2, wherein the touch-sensitive overlay comprises a cover layer for providing a protective cover over the second capacitive touch sensor circuit layers.

4. The touch screen display according to claim 3, wherein the cover layer is adhered to the second capacitive touch sensor circuit layer.

5. The touch screen display according to any preceding claim, wherein the first and second capacitive touch sensor circuit layers comprise layers of at least one of indium tin oxide (ITO), antimonly tin oxide (ATO) and aluminum doped zinc oxide (ZAO).

6. The touch screen display according to any preceding claim, wherein the substrate comprises a polymer.

7. The touch screen display according to claim 6, wherein the substrate comprises polyethylene terephthalate (PET)

8. The touch screen display according to any preceding claim, comprising a ground shield layer between the display device and the first touch sensor circuit layer and electrically isolated from the first touch sensor circuit layer.

9. The touch screen display according to claim 8, comprising a further thin-film deposited barrier layer disposed between the ground shield layer and the first touch sensor circuit layer.

10. The touch screen display according to any preceding claim, wherein the thin-film deposited barrier layer is a physical vapour deposited barrier layer.

11. The touch screen display according to any preceding claim, wherein the thin-film deposited barrier layer has a thickness in the range of from 100 nm to 300 nm.

12. A portable electronic device comprising:
a base;
a touch screen display as claimed in any preceding claim coupled to the base; and
operational components disposed between the base and the touch screen display, including a memory and a processor connected to the touch screen display and to the memory.

13. A process for fabricating a touch screen display, the process comprising:
forming a first capacitive touch sensor circuit layer in a touch-sensitive overlay stack comprising a substrate;
depositing a thin-film barrier layer on the first capacitive touch sensor circuit layer;
forming a second capacitive touch sensor circuit layer on the thin-film barrier layer.

14. The process according to claim 14, comprising forming a shield on the substrate and depositing a further thin-film barrier layer on the shield prior to forming said first capacitive touch sensor circuit layer and wherein forming said first capacitive touch sensor circuit layer comprises forming the first capacitive touch sensitive circuit layer on the further thin-film barrier layer.

15. The process according to claim 14 or claim 15, wherein depositing a thin-film barrier layer on the first capacitive touch sensor circuit layer comprises physical vapour depositing the thin-film barrier layer.
